Europäisches Patentamt

European Patent Office

Office européen des brevets

(19)

(11) Publication number: **0 081 101**
**B1**

(12) EUROPEAN PATENT SPECIFICATION

(45) Date of publication of patent specification: **04.03.87**

(51) Int. Cl.⁴: **A 61 M 1/34**, A 61 M 1/22

(21) Application number: **82110524.4**

(22) Date of filing: **15.11.82**

(54) **Apparatus for treating whole blood and process for separating whole blood for recovering plasma.**

(30) Priority: **16.11.81 US 321822**

(43) Date of publication of application:
**15.06.83 Bulletin 83/24**

(45) Publication of the grant of the patent:
**04.03.87 Bulletin 87/10**

(84) Designated Contracting States:
**AT BE CH DE FR GB IT LI LU NL SE**

(56) References cited:
**EP-A-0 021 301**
**WO-A-79/01120**
**DD-A- 77 956**
**DE-A-1 642 855**
**DE-A-2 930 986**
**GB-A-2 003 053**
**US-A-3 585 131**
**US-A-4 229 290**

(73) Proprietor: **MILLIPORE CORPORATION**
**80 Ashby Road**
**Bedford Massachusetts 01730 (US)**

(72) Inventor: **Kessler, Stephen B.**
**9 Periwinkle Lane**
**Gloucester Massachusetts 01930 (US)**

(74) Representative: **Patentanwälte Zellentin**
**Zweibrückenstrasse 15**
**D-8000 München 2 (DE)**

Courier Press, Leamington Spa, England.

## Description

This invention relates an apparatus for treating whole blood either to separate out plasma or to oxygenate the blood in a manner to permit continuous recirculation of the treated whole blood to the donor. It further relates to the use of said apparatus in a process for separating whole blood in order to recover plasma.

There are available at the present time a wide variety of blood oxygenation apparatus and plasmapheresis apparatus. Present plasmapheresis devices separate the whole blood of a blood donor in order to recover the plasma which then can be given to a patient requiring a transfusion. Plasmapheresis devices also are utilized to remove the plasma from the whole blood of a patient suffering from diseases associated with an excessively active immunological system that produce excess antibodies such as systemic lupus erythematosus, myasthenia gravis, or Goodpasture's syndrome. In either instance, it is desirable to return the concentrated whole blood to the patient or the donor since, in the former instance, such practice permits the donor to give blood again within a period of time about one quarter of that required when the whole blood is donated. In the latter instance, such a practice permits treating the patient's entire blood volume in a single treatment. In both instances, the advantages of such a practice are obvious since it permits either an increased quantity of donated blood per donor or increased effective treatment of a dangerous disease.

It has been proposed to provide a method and apparatus for extracting blood to form a plasma fraction and an enriched blood fraction in U.S. patent 3,705,100. The apparatus utilizes a reservoir for whole blood and a filtration membrane as well as a flow directing means and a pressure generating means for passing the blood adjacent the membrane thereby effecting the desired filtration. The primary disadvantage of this device is that it is a batch device and it is incapable of continuously treating blood from a patient and for continuously recirculating enriched blood to the patient. This, of course, is undesirable since it greatly increases the time required for treating a given volume of blood and subjects the patient to multiple punctures in order to obtain samples to be treated.

It also has been reported in the final report of NHLBI Contract No. 1-HB-6-2928, June, 1976—April, 1979 to the American Red Cross to utilize a blood filtration system that permits continuous withdrawal of blood and continuous reintroduction of enriched blood back to the patient. However, this device requires a recirculating system for passing blood through a channel and adjacent filter a multiplicity of times. The recirculating system is required to achieve proper balance between shear forces on the blood and pressure drop for the channel height utilized thereby to minimize blood damage. While the desired balance is achieved, the increased surface exposure for the recirculating blood necessitated thereby also increases the risk of blood damage thereby rendering the apparatus undesirable. In addition U.S. patent 4,191,182 to Popovich discloses a plasmapheresis apparatus that requires an undesirable recirculating system for blood in order to maintain the perceived required shear stresses during filtration.

Membrane oxygenators are available wherein blood and oxygen-containing gas are passed into contact on opposing surfaces of a membrane and wherein oxygen is transferred through the membrane into the blood while carbon dioxide is transferred from the blood through the membrane into the oxygen-containing stream. Presently available membrane oxygenators provide a relatively thick blood film of generally greater than 0,2 mm. The factor limiting efficiency in such devices is resistance to oxygen diffusion in the blood film.

One approach to reducing this resistance is typified by U.S. patent 4,168,293 in which a woven screen is introduced into the blood channel to induce mixing of the blood. This approach, however, leads to blood damage and potential thrombus formation, especially if used for long-term respiratory support.

Another approach is typified by Bellhouse et al, Transactions of American Society of Artificial Internal Organs, Volume XIX, 1973, page 72, which describes a furrowed membrane and a pulsatile pumping system also intended to create mixing within the blood channels. While potentially less damaging to the blood than a mixing screen, the device and its associated hardware are complex and costly to manufacture. The 0,4 mm blood film thickness of this device is what leads to the necessity for such measures.

EP—A—0 021 301 discloses an apparatus for continuous plasmapheresis comprising circular plates having on both sides groove-like channels for blood or plasma which do not extend through the entire thickness of the plate. Between the surfaces of two of said plates a membrane is arranged. The apparatus requires the use of a recirculation circuit which is necessary so that the blood within the device has the required flow rate.

Such recirculation circuit requires a certain volume of blood in order to operate continuously. Therefore, the donor or the patient to be treated is depleted of rather undesirably large quantities of blood.

US—A—3 585 131 discloses an apparatus which can be used for blood oxygenation, similar to the last mentioned apparatus insofar as the apparatus also utilizes plates which are provided with groove-like channels which do not extend through the entire thickness of the plate and comprises membranes arranged between two of such plates.

The channels formed in the plates of both prior art apparatuses have, therefore, only *one* wall which is formed by the membrane hold between the plates.

It would be highly desirable to provide a membrane device for processing blood whose blood channels approached the dimensions of the microcirculation of the human body (less than 0,1 mm diameter in height). The high surface to volume ratio of such a device would allow the separation of blood into a plasma stream and an enriched blood stream to be reintroduced into the patient in a single pass through the device. Such a device would minimize both blood damage and blood priming volume.

Utilized as a blood oxygenator, the high surface to volume ratio would give inherently high efficiency. Further increase in efficiency results from shear augmentation of oxygen diffusion without the need for blood damaging mixing screens or elaborate externally driven systems.

It is therefore one main object of the present invention to provide an apparatus for treating whole blood to effect material transfer from or into whole blood, especially transfer of oxygen into the whole blood or transfer of plasma out of the whole blood to obtain a plasma fraction and a plasma depleted, enriched blood fraction, which apparatus allows to effectively treat the whole blood without the need of an externally driven system and without blood damaging. It is a further object of the present invention to provide a process for separating whole blood in order to recover plasma which can be used e.g. as banked plasma.

Further objects will become apparent to one skilled in the art from the following description of preferred embodiments of the invention.

Said and other objects are achieved by the apparatus according to the present invention, which apparatus comprises: at least two contiguous membrane units, each unit consisting of a first membrane layer, a second membrane layer, a first spacer layer positioned between a first surface of the first membrane layer and a first surface of said second membrane layer, and a second spacer layer positioned on a second surface of said second membrane layer,

said first spacer layer, having a plurality of channels, inlet means for introducing whole blood into said channels and blood outlet means for removing treated blood from said channels,

said second spacer layer including means for introducing material into said whole blood or means for removing material from said whole blood through said membrane layers,

sealing means associated with each of said first and second spacer layers for preventing whole blood from being admixed with material introduced into said whole blood without first passing said material through a membrane layer or for preventing whole blood from being admixed with blood from which a blood fraction has been removed,

characterized in that

each channel of said plurality of channels within said first spacer layer is between 0,02 and 0,1 mm in height and extends the entire thickness of said first spacer layer,

and that said membrane layers are bonded to the first and second spacer layers over their entire mating surfaces.

The process for recovering plasma according to the present invention comprises:

introducing whole blood into first channels within a first spacer layer of a membrane unit,

said membrane unit consisting of a first membrane layer, a second membrane layer, said first spacer layer positioned between a first surface of the first membrane layer and a first surface of said second membrane layer, and a second spacer layer positioned on a second surface of said second membrane layer,

removing treated blood from said first channels,

effecting plasma transfer from said whole blood through said membrane layers into second channels in said second spacer layer,

removing plasma from said second channels through an outlet connected with said second channels,

and providing sealing means with each of said first and second spacer layers for preventing whole blood from being admixed with blood from which the plasma fraction has been removed,

characterised in that

the channels within said first and second spacer layers extend through the entire thickness of said first and second spacer layers,

the height of the channels within said first spacer layer being between 0,02 and 0,1 mm, and

said first and second membrane layers are bonded to the first and second spacer layers over their entire mating surfaces.

According to the present invention there is provided a multilayer membrane construction comprising a plurality of contiguous membrane units each of which consists of two membrane layers and two spacer layers. The spacer layers are in alternating relationship with the two membrane layers.

In the plasmapheresis embodiment, one spacer layer has a plurality of channels having a critical height between about 0,02 and about 0,1 mm. It is desirable that the channels have a length between 1 and about 10 cm and a width between about 0,05 and 0,5 cm. This spacer layer has an inlet means for introducing whole blood into the channels and an outlet means for accumulating blood depleted of plasma from the channels. The second spacer includes a plurality of channels each of which are connected to a plasma outlet adapted to collect plasma from the whole blood. The membrane units are sealed so that whole blood or plasma depleted blood is prevented from passing into the plasma outlet.

In the blood oxygenator embodiment, one spacer layer utilized for blood flow has a plurality of channels each of which is between about 0,02 and about 0,1 mm in height. The *total* channel surface area for all spacer layers is between about 0,5 m² and 2,0 m². The channels in a first spacer adjacent a first surface of a membrane layer connect an oxygen gas inlet and a gas outlet. The channels of a second spacer utilized for blood flow adjacent a second surface of the filter layer connect a blood inlet and a blood outlet which are sealed from the gas inlet and gas outlet.

In both embodiments the membrane and spacers must be securely bonded to each other over their entire mating surface. This bonding secures the membrane between adjacent spacer elements and thus limits changes in channel height to local membrane deflection. The width of the individual channels represents the span over which the membrane is free to deflect and is determined by the mechanical properties of typical membrane materials. The combination of the above factors allows critical control of channel heights of less than 0,1 mm.

In the following preferred embodiments of the apparatus in accordance with the present invention will be more fully described with references to the accompanying drawings, in which:

Fig. 1 is an exploded view of the blood plasmapheresis filter unit of this invention.

Fig. 2 is a top view of a membrane and the first spacer of Fig. 1 in contiguous relationship.

Fig. 3 is a top view of an alternative second spacer construction.

Fig. 4 is a top view of an alternative second spacer construction.

Fig. 5 is a top view of an alternative second spacer construction.

Fig. 6 is a top view of the plasmapheresis housing of this invention.

Fig. 7 is a cross-sectional view of the housing in Fig. 6 taken along line 7—7.

Fig. 8 is a cross-sectional view of the housing in Fig. 6 taken along line 8—8.

Fig. 9 is an exploded view of the blood oxygenator filter unit of this invention.

Fig. 10 is a top view of the blood oxygenator filter unit.

Fig. 11 is a cross-sectional view of the filter unit of Fig. 10 taken along line 11—11.

Fig. 12 is a cross-sectional view of the filter unit of Fig. 10 taken along line 12—12.

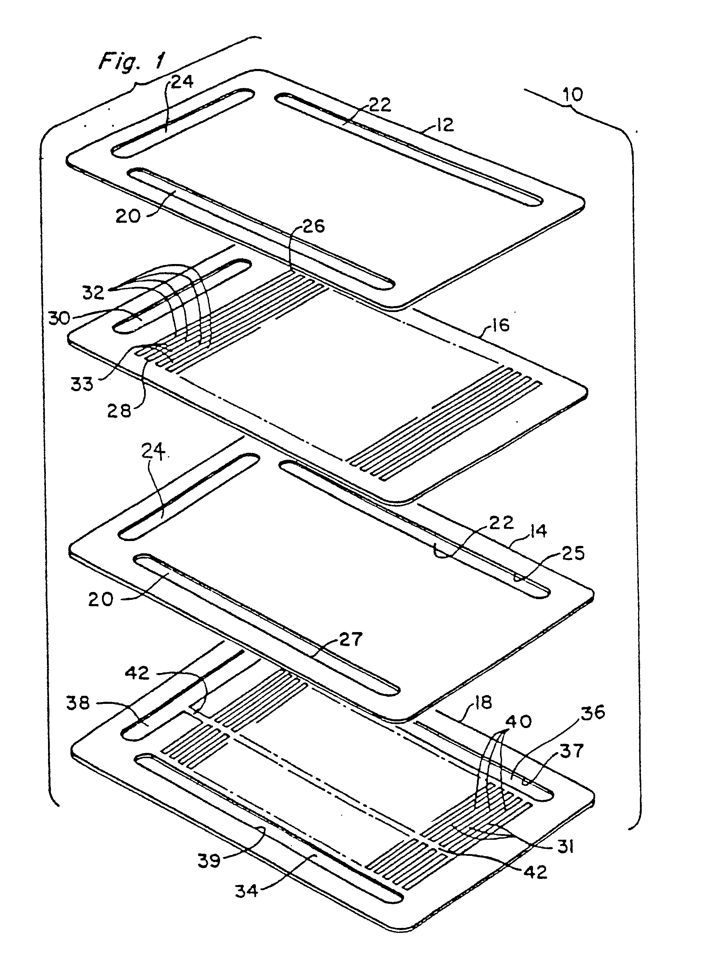

As shown in Fig. 1, the filter unit 10 comprises, a first membrane 12, a second membrane 14, a first spacer 16, and a second spacer 18. Both the first membrane 12 and the second membrane 14 are of identical construction and are formed from a pliable hydrophilic microporous filter material and having an average pore size extending in submicrometer range from about 0,2 and 1,0 micrometers, preferably between about 0,5 and 0,7 micrometers, currently marketed by Millipore Corporation and identified as MF-Millipore®, Celotate®, Durapore® (hydrophilic) filters, Duralon® filter, Polyvic® filters, Solveret® filters, and Microweb® filters. Each membrane 12 and 14 is provided with two longitudinal channels 20 and 22 and a widthwide channel 24. The widthwise channel 24 is not in fluid communication with either of the channels 20 or 22. The first spacer 16 comprises a plurality of channels 32 which extend from edge 26 to edge 28 and an outlet channel 30. When membranes 12 and 14 are contiguous to spacer 16, the edges 26 and 28 coincide with the edges 25 and 27 respectively. The second spacer 18 is provided with whole blood inlet channel 34, a blood outlet 36 and a widthwise plasma outlet channel 38. The second spacer 18 also is provided with interior channels 40 which provide fluid communication with channel 42 which in turn is in fluid communication with plasma outlet channel 38. When spacer 18 is juxtaposed to membrane 14, edges 37 and 39 coincide respectively with edges 25 and 27 of spacer 14. The spacer strips 33 between channels 32 and the spacer strips 31 between the channels 40 are bonded to the next adjacent membrane and provide the necessary support for the membranes adjacent the channels so that membrane flexibility is controlled to maintain the desired channel height.

The channels 32 in first spacer 16 should have a particular height, width and length in order to accommodate the normal blood flow rate from a donor so that blood can be removed continuously while enriched blood from which plasma has been removed can be reintroduced continuously to the donor. In addition, the channel height must be regulated so that the wall shear rate and pressure drop are in the proper range not to cause significant blood damage. Accordingly, it is essential that the channels 32 in the first spacer 16 have a height between about 0,02 and about 0,1 mm, preferably between about 0,06 and 0,09 mm. Furthermore, it is preferred that the channels 32 have a cumulative width between about 20 and about 100 cm, an individual width between 0,05 cm and 0,5 cm and a length between about 1 and about 10 cm, preferably a cumulative width between about 50 and about 70 cm, for all of the channels in all of the first spacers an individual width between 0,08 and 0,12 cm, and a length between about 4 and about 6 cm. It has been found that with typical blood flow rate from a donor of about 60 and about 70 ml/min and a typical blood outlet pressure between about 50 and about 80 mm Hg, utilization of a spacer having the channel size of this invention, shear rates of between 1000 and 3000 sec$^{-1}$. can be obtained which effects substantial prevention of hemolysis at the corresponding transmembrane pressures.

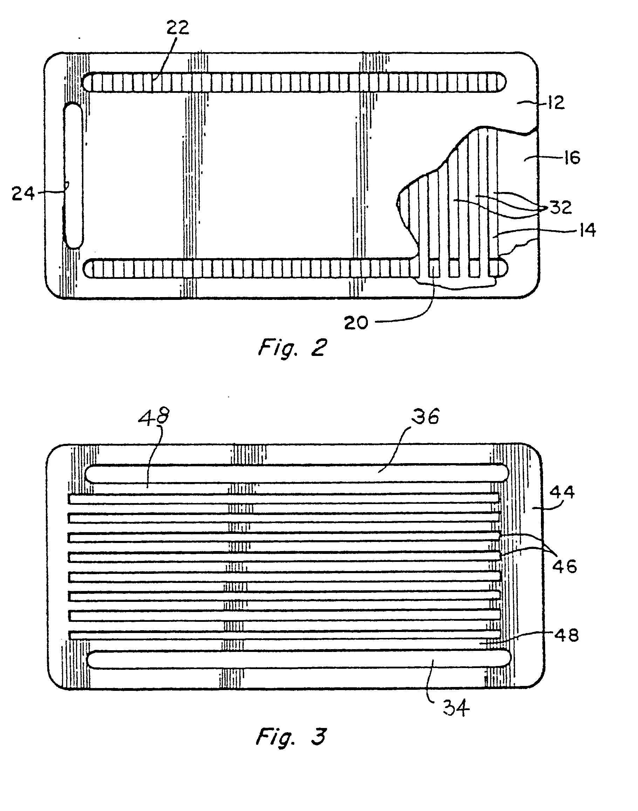

Referring to Fig. 2, the channels 32 of first spacer 16 are shown to overlap into channel 20 and 22 of membrane 14. This overlap permits introduction of whole blood into channel 20, passage of the whole blood lengthwise along channels 32 while being in contact with membrane 14 and removal of plasma-depleted blood from channels 32 through widthwise channel 22.

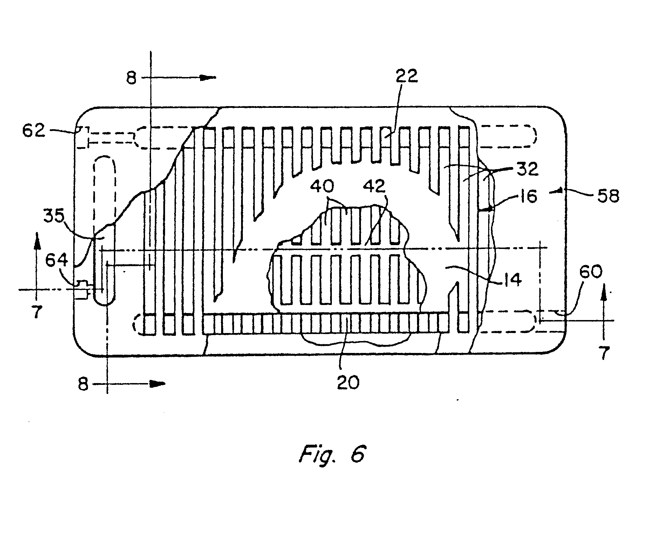

Referring to Fig. 3, the second spacer 44 can comprise a whole blood inlet 34 which is spaced apart from channels 46 by means of spacer width 48 so that blood in inlet 34 cannot pass directly into channels 46 but can only move through parallel channels 32 (see Fig. 1). Thus, only plasma which has passed through a membrane 14 or 12 can enter channels 46. In this configuration, the parallel channels 46 can overlap into a widthwise channel 24 (see Fig. 1) or can be in fluid communication directly with a channel for removing plasma from the housing (see Fig. 6). The plasma-depleted blood outlet 36 also is insulated from parallel channels 46 by means of spacer section 48 so that plasma cannot be mixed with plasma-depleted blood.

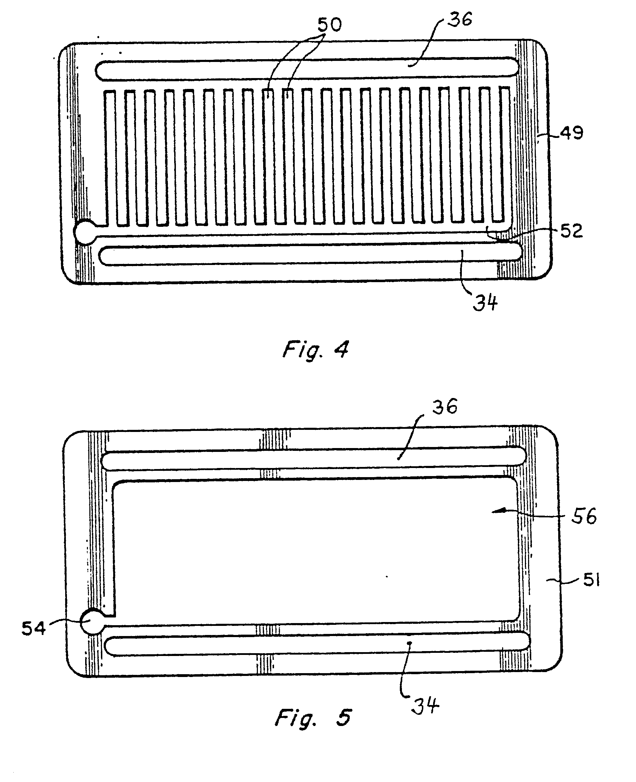

Referring to Fig. 4, the second spacer 49 can comprise longitudinal channels 34 and 36 and parallel widthwise channels 50 which are in fluid communication with longitudinal channel 52. The channels 34 and 36 serve the purposes described above while channels 50 serve to direct plasma removed from the whole blood into channel 52 which is in fluid communication with means for removing plasma from the housing (see Fig. 6).

Referring to Fig. 5, the second spacer 51 comprises longitudinal channels 34 and 36 which serve the purposes described above and an open space 56 within the central portion of the spacer 51. The open space 56 is in fluid communication with channel 54 which in turn is in fluid communication with a means for removing plasma from the housing (see Fig. 6). Alternatively the second spacer can comprise a woven mesh of a polymeric fiber material so as to provide space between adjacent membranes thereby to permit plasma flow to the plasma outlet.

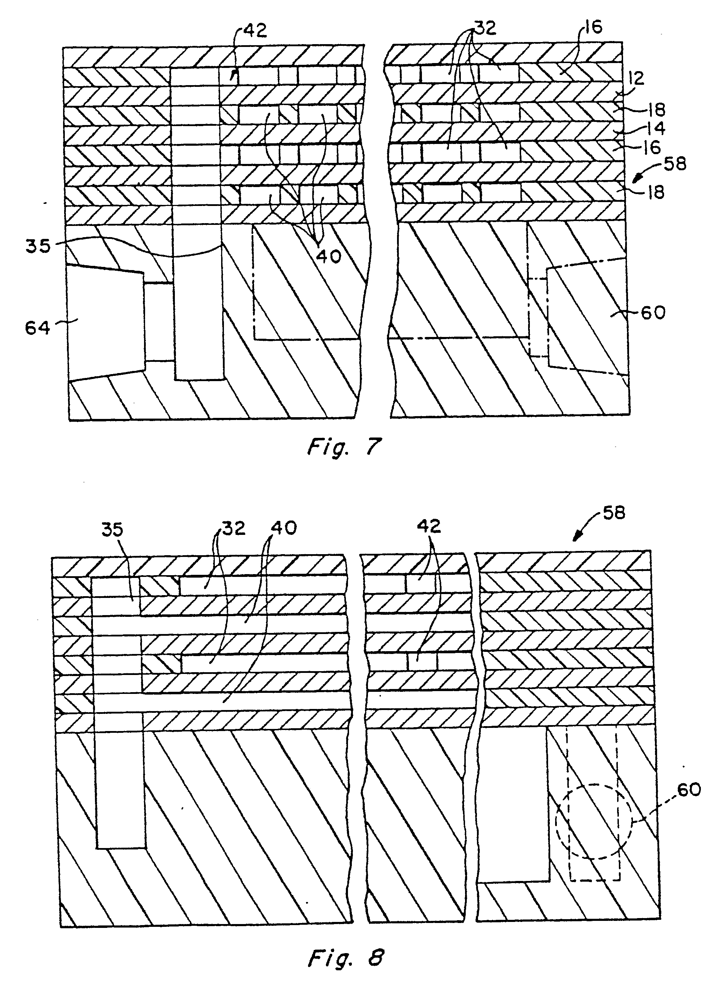

Referring to Figs. 6, 7 and 8, the filter units of this invention are shown in stacked relationship within a housing 58. The whole blood inlet channel 20 of each membrane 12 and 14 and channels 34 and 36 of each spacer 16 and 18 are aligned to form a first vertical channel within the housing 58. Whole blood is introduced into said first vertical channel through inlet 60. The whole blood passes along channels 32 of spacer 16 into a second vertical channel which is utilized to collect plasma-depleted blood. As with said first vertical channel, this second vertical channel is formed by the alignments of channels 22 in each of the membranes 12 and 14 and channels 34 and 36 of each spacer together with the fact that channels 32 overlap into this channel. The housing 58 is provided with an outlet 62, which is utilized to withdraw plasma-depleted blood from said second vertical channel. The housing 58 is also provided with plasma outlet 64, which is in fluid communication with channel 35, which is formed by the alignments of channels 24 of membranes 12 and 14, channel 30 of spacer 16 and channel 38 of spacer 18.

In operation, whole blood from a patient or donor enters housing 58 through inlet 60 and passes along channels 32 of spacer 16 widthwise through housing 58. While blood is passing through channels 32, the membranes 12 and 14 allow passage of plasma therethrough while preventing the remainder of the whole blood from passing therethrough. Similarly, whole blood is prevented from directly entering channels 40 of spacer 18 by means of sealing strips 48. Thus, whole blood is prevented from entering channel 22. The plasma which enters channels 40 of spacer 18 is directed through outlets 42 into channel 35. Channel 35 is connected to outlet 64. Suitable tube means are connected to outlets 62 and 64 and inlet 60 to permit withdrawal of whole blood directly from patient or donor and reintroduction of plasma-depleted blood directly into the patient on a continuous one pass basis.

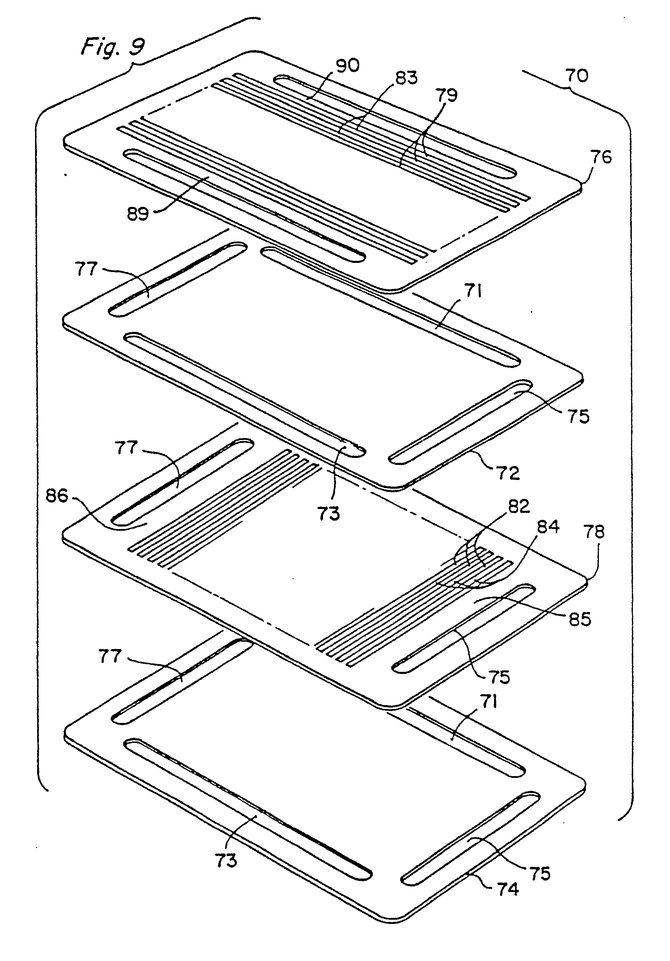

As shown in Fig. 9, the filter unit 70 for the blood oxygenator comprises a first membrane 74, a second membrane 72, a second spacer 76 and a first spacer 78. Both the first membrane 74 and the second membrane 72 are of identical construction and are formed from hydrophobic microporous membranes such as Fluoropore® or Durapore® (hydrophobic) or solid film such as polydimethylsiloxane, polyalkylsulfone or ethylcellulose perfluorobutyrate. Each membrane 72 and 74 is provided with two longitudinal channels 71 and 73 and two widthwise channels 75 and 77. The widthwise channels 75 and 77 are not in fluid communication with either of the channels 71 and 73. The second spacer 76 comprises of plurality of channels 79 which communicate with channels 75 and 77 when membranes 72 and 74 are contiguous to spacer 76 for passage of oxygen-containing gas through the filter unit 70. Channels 79 of spacer 76 overlap channels 75 and 77 when spacer 76 is contiguous to membranes 74 and 76. The first spacer 78 is provided with interior channels 82 which provide fluid communication between longitudinal channels 71 and 73 when spacer 78 is juxtaposed to membranes 72 and 74 to permit passage of blood through the filter unit 70. The spacer strips 83 between channels 79 as well as the spacer strips 84 between the channels 82 are bonded to the next adjacent membranes and provide the necessary support for the membranes adjacent the channels so that membrane flexibility is controlled to maintain the desired channel height. The channels 82 in first spacer 78 should have a particular height, width and length in order to accommodate the normal blood flow rate from a patient so that blood can be removed continuously while oxygen enriched blood can be reintroduced continuously to the patient. In addition, the channel height must be regulated so that the wall shear rate is in the proper range to give sufficient augmentation of oxygen transfer in the blood film. Accordingly, it is essential that the channels 82 in the first spacer 78 have a height between about 0,02 and about 0,1 mm. Furthermore, it is preferred that the channels have an individual width between 0,05 cm and 0,2 cm and a length between about 1 and about 10 cm, preferably an individual width between 0,08 and 0,12 cm.

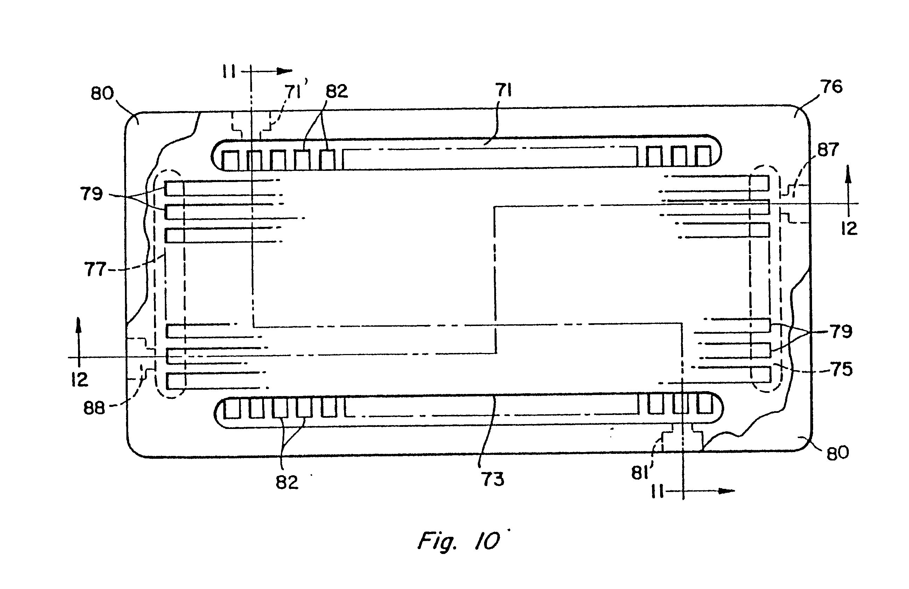

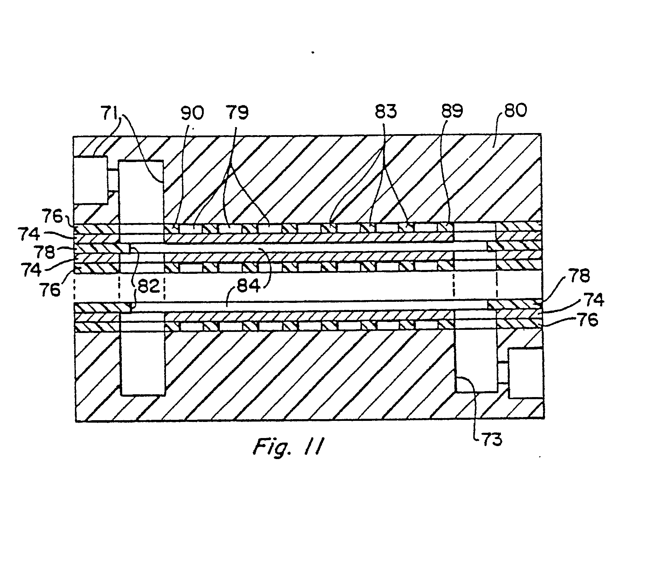

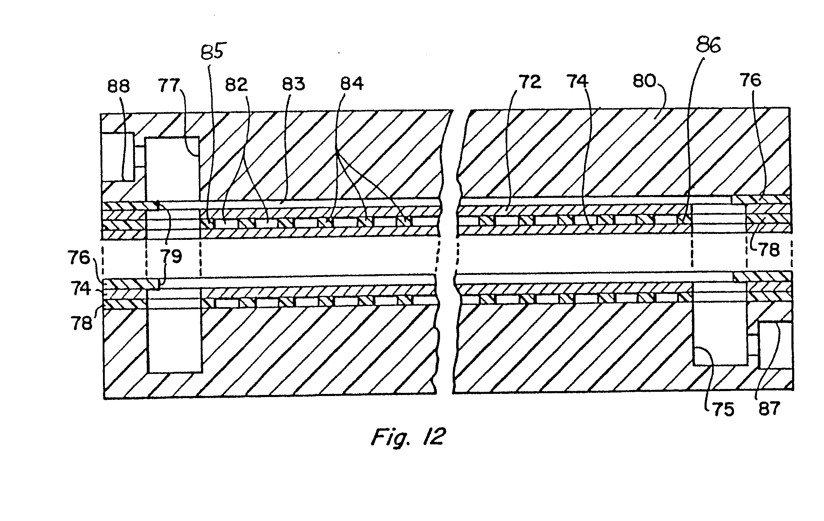

When utilizing the blood oxygenator shown in Figs. 9, 10, 11, and 12, the filter units 70 of this invention are in stacked relationship within a housing 80, the whole blood inlet channel 71' is in fluid communication with channel 71. Whole blood is introduced into the channel 71 and passes along channels 82 of spacer 78 into channel 73 which is utilized to collect oxygenated blood for removal through blood outlet 81'.

In operation, whole blood from a patient enters housing 80 through inlet 71' and passes along channels 82 of spacer 78. While blood is passing through channels 82, the membranes 72 and 74 allow passage of oxygen therethrough while preventing the blood from passing therethrough. Similarly, whole blood is prevented from directly entering channels 75 and 77 of spacer 78 by means of sealing strips 85 and 86. Oxygen enters gas inlet 87, passes into channel 75 and channels 79 and passes through membranes 72 and 74 into blood within channels 82. Oxygen-depleted gas passes into channel 77 and out gas outlet 88. Oxygen gas is prevented from passing directly into the blood by means of sealing strips 89 and 90. The gas utilized generally has a pressure of between about 100 mm Hg and 300 mm Hg above atmospheric in order to effect transfer of oxygen in proper concentrations without causing gas bubbling through the filter or in the blood. A mixture of oxygen with other gases such as $CO_2$, or $N_2$ can be utilized. The oxygenated blood is directed through outlets 81 which can be connected to suitable tube means to permit withdrawal of whole blood directly from the patient and reintroduction of oxygenated blood directly into the patient on a continuous one pass basis.

**Claims**

1. Apparatus for treating whole blood to effect material transfer from or into the whole blood, which comprises:

at least two contiguous membrane units (10, 70), each unit consisting of a first membrane layer (12, 74), a second membrane layer (14, 72), a first spacer layer (16, 78) positioned between a first surface of the first membrane layer (12, 74) and a first surface of said second membrane layer (14, 72), and a second spacer layer (18, 44, 49, 51, 76) positioned on a second surface of said second membrane layer (14, 72),

said first spacer layer (16, 78) having a plurality of channels (32, 83), inlet means (20, 71) for introducing whole blood into said channels (32, 82) and blood outlet means (22, 73) for removing treated blood from said channels (32, 82),

said second spacer layer (18, 44, 49, 51, 76) including means (79) for introducing material into said whole blood or means (40, 42; 46, 50, 52, 56; 38, 54) for removing material from said whole blood through said membrane layers (12, 74; 14, 72),

sealing means associated with each of said first (16, 78) and second spacer layers (18, 44, 49, 51, 76) for preventing whole blood from being admixed with material introduced into said whole blood without first passing said material through a membrane layer (72, 74) or for preventing whole blood from being admixed with blood from which a blood fraction has been removed,

characterised in that

each channel (32, 82) of said plurality of channels (32, 82) within said first spacer layer (16, 78) is between 0,02 and 0,1 mm in height and extends through the entire thickness of said first spacer layer (16, 78),

and that said membrane layers (12, 74; 14, 72) are bonded to the first (16, 78) and second (18, 44, 49, 51, 76) spacer layers over their entire mating surfaces.

2. The apparatus of claim 1 including means (38) for collecting plasma and means (36) for collecting plasma-depleted blood from said membrane units (10) and means (34) for introducing whole blood into said membrane units (10).

3. The apparatus of claim 1 including means (75) for introducing a free-oxygen containing gas into channels (79) positioned within said second spacer layer (76) and extending through the entire thickness of said second spacer layer, means (71) for introducing whole blood into the channels (82) of said first spacer layer (78), means (81) for removing oxygenated blood from said membrane units (70) and means (77) for removing oxygen-depleted gas from said membrane units (70).

4. The apparatus of claims 1 and 2 for separating whole blood into a plasma fraction and an enriched, plasma-depleted blood fraction, wherein

said second spacer layer (18, 44, 49, 51) includes means (40, 42; 46; 50, 52, 56) connected to a plasma outlet (38, 54) adapted to collect plasma from said whole blood,

the sealing means associated with each of said first (16) and second (18) spacer layers prevent whole blood or plasma-depleted blood from passing into said plasma outlet (38, 54),

each of said channels (32) within said first spacer layer (16) further is between 1 and 10 cm in length, cumulatively between about 20 and 100 cm in width, and individually between about 0,05 and 0,5 cm in width, and

said means (40, 42; 46; 50, 52) in said second spacer layer (18, 44, 49) adapted to collect plasma from said whole blood also extend through the entire thickness of said second spacer layer (18, 44, 49).

5. The apparatus of claim 4, wherein the channels (32) in said first spacer layer (16) are each between about 0,06 and 0,09 mm in height.

6. The apparatus of claim 4, wherein the channels (32) in said first spacer layer (16) are each between about 4 and 6 cm in length.

7. The apparatus of claim 4, wherein the channels (32) in said first spacer layer (16) are between about 50 and 70 cm in cumulative width.

8. The apparatus of claim 4, wherein said second spacer layer (18) includes a plurality of parallel channels (46) each directly connected to a plasma outlet.

9. The apparatus of claim 4, wherein the plurality of channels (40, 50) in said second spacer layer (18) are connected to a passageway (42, 52) running perpendicularly to said channels (40, 50) and said passageway (42, 52) is connected to said plasma outlet (38, 54).

10. Process for separating whole blood into a plasma fraction and an enriched, plasma-depleted blood fraction, the process being for non-therapeutic and non-diagnostic purposes and serving to recover the plasma, which process comprises

introducing whole blood into first channels (32) within a first spacer layer (16) of a membrane unit (10),

said membrane unit (10) consisting of a first membrane layer (12), a second membrane layer (14), said first spacer layer (16) positioned between a first surface of the first membrane layer (12) and a first surface of said second membrane layer (14), and a second spacer layer (18, 44, 49) positioned on a second surface of said second membrane layer (14),

removing treated blood from said first channels (32),

effecting plasma transfer from said whole blood through said membrane layers (12, 14) into second channels (40, 42, 46, 50, 52) in said second spacer layer (18, 44, 49),

removing plasma from said second channels (40, 42, 46, 50, 52) through an outlet (38) connected with said second channels,

and providing sealing means with each of said first (16) and second (18, 44, 49) spacer layers for preventing whole blood from being admixed with blood from which the plasma fraction has been removed,

characterized in that

the channels (32, 40, 42, 46, 50, 52) within said first and second spacer layers extend through the entire thickness of said first and second spacer layers (16, 18, 44, 49),

the height of the channels (32) within said first spacer layer (16) being between 0,02 and 0,1 mm, and

said first and second membrane layers (12, 14) are bonded to the first (16) and second (18, 44, 49) spacer layers over their entire mating surfaces.

11. The process of claim 10, wherein the channels (32) within said first spacer layer (16) have a length between about 1 and 10 cm, a cumulative width between about 20 and 100 cm and an individual width between about 0,05 and 0,5 cm.

**Patentansprüche**

1. Vorrichtung zur Behandlung von Vollblut, um einen Materialtransport aus dem oder in das Vollblut zu bewirken, die umfaßt:

wenigstens zwei benachbarte Membraneinheiten (10, 70), von denen jede Einheit aus einer ersten Membranschicht (12, 74), einer zweiten Membranschicht (14, 72), einer ersten Abstandshalterschicht (16, 78), die zwischen einer ersten Oberfläche der ersten Membranschicht (12, 74) und einer ersten Oberfläche der genannten zweiten Membranschicht (14, 72) angeordnet ist, sowie aus einer zweiten Abstandshalterschicht (18, 44, 49, 51, 76) besteht, die auf einer zweiten Oberfläche der genannten zweiten Membranschicht (14, 72) angeordnet ist,

wobei die erste Abstandshalterschicht (16, 78) eine Vielzahl von Kanälen (32, 82), einen Einlaß (20, 71) zur Einführung von Vollblut in die genannten Kanäle (32, 82) und einen Blutauslaß (22, 73) zur Entfernung des behandelten Blutes aus den genannten Kanälen (32, 82) aufweist,

die genannte zweite Abstandshalterschicht (18, 44, 49, 51, 76) Mittel (79) zur Einführung von Material in das genannte Vollblut oder Mittel (40, 42; 46; 50, 52, 56; 38, 54) zur Entfernung von Material aus dem genannten Vollblut durch die genannten Membranschichten (12, 74; 14, 72) aufweist;

Dichtmittel, die jeder der genannten ersten (16, 78) und zweiten Abstandshalterschichten (18, 44, 49, 51, 76) zugeordnet sind, um zu verhindern, daß sich Vollblut mit dem Material vermischt, das in das genannte Vollblut eingeführt wird, ohne daß dieses Material zuerst durch eine Membranschicht (72, 74) hindurchtritt, oder um zu verhindern, daß sich Vollblut mit dem Blut vermischt, aus dem eine Blutfraktion entfernt wurde,

dadurch gekennzeichnet,

daß jeder Kanal (32, 82) der genannten Vielzahl von Kanälen (32, 82) in der genannten ersten Abstandshalterschicht (16, 78) eine Höhe zwischen 0,02 und 0,1 mm aufweist und sich über die gesamte Dicke der genannten ersten Abstandshalterschicht (16, 78) erstreckt,

und daß die genannten Membranschichten (12, 74; 14, 72) an die ersten (16, 78) und zweiten (18, 44, 49, 51, 76) Abstandshalterschichten über ihre gesamten Anlageflächen gebunden sind.

2. Vorrichtung nach Anspruch 1, die Mittel (38) zum Sammeln von Plasma sowie Mittel (36) zum Sammeln eines plasma-abgereicherten Blutes aus den genannten Membraneinheiten (10) sowie Mittel (34) zur Einführung von Vollblut in die genannten Membraneinheiten (10) umfaßt.

3. Vorrichtung nach Anspruch 1, die Mittel (75) zur Einführung eines freien Sauerstoff enthaltenden Gases in Kanäle (79), die in der genannten zweiten Abstandshalterschicht (76) angeordnet sind und sich durch die gesamte Dicke der genannten zweiten Abstandshalterschicht erstrecken, Mittel (71) zur Einführung von Vollblut in die Kanäle (82) der genannten ersten Abstandshalterschicht (78), Mittel (81) zur Entfernung eines mit Sauerstoff behandelten Blutes aus den genannten Membraneinheiten (70) sowie Mittel (77) zur Entfernung eines an Sauerstoff abgereicherten Gases aus den genannten Membraneinheiten (70) umfaßt.

4. Vorrichtung nach den Ansprüchen 1 und 2 zur Auftrennung von Vollblut in eine Plasmafraktion und eine angereicherte plasma-abgereicherte Blutfraktion, bei der

die genannte zweite Abstandshalterschicht (18, 44, 49, 51) Mittel (40, 42; 46; 50, 52, 56) umfaßt, die mit einem Plasmaauslaß (38, 54) verbunden sind und zur Sammlung von Plasma aus dem genannten Vollblut geeignet sind,

die jeder der genannten ersten (16) und zweiten (18) Abstandshalterschicht zugeordneten Dichtmittel verhindern, daß Vollblut oder ein plasmaabgereichertes Blut in den genannten Plasmaauslaß (38, 54) gelangt,

jeder der genannten Kanäle (32) innerhalb der genannten ersten Abstandshalterschicht (16) außerdem eine Länge zwischen 1 und 10 cm, eine additiv gebildete Gesamtbreite zwischen etwa 20 und 100 cm und eine individuelle Breite zwischen etwa 0,05 und 0,5 cm aufweist, und

die genannten Mittel (40, 42; 46; 50, 52) in der genannten zweiten Abstandshalterschicht (18, 44, 49), die für die Sammlung von Plasma aus dem genannten Vollblut geeignet sind, sich ebenfalls durch die gesamte Dicke der genannten zweiten Abstandshalterschicht (18, 44, 49) erstrecken.

5. Vorrichtung nach Anspruch 4, bei der die Kanäle (32) in der genannten ersten Abstandshalterschicht (16) jeweils eine Höhe zwischen etwa 0,06 und 0,09 mm aufweisen.

6. Vorrichtung nach Anspruch 4, bei der die Kanäle (32) in der genannten ersten Abstandshalterschicht (16) jeweils eine Länge zwischen etwa 4 und 6 cm aufweisen.

7. Vorrichtung nach Anspruch 4, bei der die Kanäle (32) in der genannten ersten Abstandshalterschicht (16) eine additiv gebildete Gesamtbreite zwischen etwa 50 und 70 cm aufweisen.

8. Vorrichtung nach Anspruch 4, bei der die genannten zweite Abstandshalterschicht (18) eine Vielzahl von parallelen Kanälen (46) aufweist, von denen jeder direkt mit einem PLasmaauslaß in Verbindung steht.

9. Vorrichtung nach Anspruch 4, bei der die Vielzahl von Kanälen (40, 50) in der genannten zweiten Abstandshalterschicht (18) mit einem Durchlaß (42, 52) in Verbindung stehen, der sich senkrecht zu den genannten Kanälen (40, 50) erstreckt, und bei der dieser genannte Durchlaß (42, 52) mit dem genannten Plasmaauslaß (38, 54) in Verbindung steht.

10. Verfahren zur Auftrennung von Vollblut in eine Plasmafraktion und eine angereicherte, plasma-abgereicherte Blutfraktion, wobei dieses Verfahren für nicht-therapeutische und nicht-diagnostische Zwecke bestimmt ist und dazu dient, das Plasma zu gewinnen, wobei das Verfahren umfaßt

Einführen von Vollblut in erste Kanäle (32) innerhalb einer ersten Abstandshalterschicht (16) einer Membraneinheit (10),

wobei die genannte Membraneinheit (10) aus einer ersten Membranschicht (12), einer zweiten Membranschicht (14), einer ersten Abstandshalterschicht (16), die zwischen einer ersten Oberfläche der ersten Membranschicht (12) und einer ersten Oberfläche der genannten zweiten Membranschicht (14) angeordnet ist, und aus einer zweiten Abstandshalterschicht (18, 44, 49) besteht, die auf einer zweiten Oberfläche der genannten zweiten Membranschicht (14) angeordnet ist,

das Entfernen des behandelten Blutes aus den genannten ersten Kanälen (32),

die Bewirkung eines Plasmatransports aus dem genannten Vollblut durch die genannten Membranschichten (12, 14) in zweite Kanäle (40, 42, 46, 50, 52) in der genannten zweiten Abstandshalterschicht (18, 44, 49),

das Entfernen von Plasma aus den genannten zweiten Kanälen (40, 42, 46, 50, 52) durch einen Auslaß (38), der mit den genannten zweiten Kanälen in Verbindung steht,

und Bereitstellung von Dichtmitteln an jeder der genannten ersten (16) und zweiten Abstandshalterschicht (18, 44, 49), um zu verhindern, daß sich Vollblut mit Blut vermischt, aus dem die Plasmafraktion entfernt wurde,

dadurch gekennzeichnet, daß

die Kanäle (32, 40, 42, 46, 50, 52) in den genannten ersten und zweiten Abstandshalterschichten sich durch die gesamte Dicke der genannten ersten und zweiten Abstandshalterschichten (16, 18, 44, 49) erstrecken,

die Höhe der Kanäle (32) in der genannten ersten Abstandshalterschicht (16) zwischen 0,02 und 0,1 mm beträgt und

die genannten ersten und zweiten Membranschichten (12, 14) an die ersten (16) und zweiten (18, 44, 49) Abstandshalterschichten über ihre gesamten Anlageflächen gebunden sind.

11. Verfahren nach Anspruch 10, bei dem die Kanäle (32) in der genannten ersten Abstandshalterschicht (16) eine Länge zwischen etwa 1 und 10 cm, eine additiv gebildete Gesamtbreite zwischen etwa 20 und 100 cm und eine individuelle Breite zwischen etwa 0,05 und 0,5 cm aufweisen.

**Revendications**

1. Appareil pour traiter du sang complet en vue de réaliser un transfert de matière à partir de ou jusque dans le sang complet, qui comprend:

—au moins deux unités à membranes contiguës (10, 70), chaque unité se composant d'une première couche de membrane (12, 74), d'une seconde couche de membrane (14, 72), d'une première couche d'espacement (16, 78) positionnée entre une première surface de la première couche de membrane (12, 74) et une première surface de ladite seconde couche de membrane (14, 72), et d'une seconde couche d'espacement (18, 44, 49, 51, 76) positionnée sur une seconde surface de ladite seconde couche de membrane (14, 72),

—ladite première couche d'espacement (16, 78) comportant une pluralité de canaux (32, 82), des moyens d'entrée (20, 71) pour introduire du sang complet dans lesdits canaux (32, 82) et des moyens de sortie de sang (22, 73) pour évacuer du sang traité desdits canaux (32, 82),

—ladite seconde couch d'espacement (18, 44, 49, 51, 76) comprenant un moyen (79) pour introduire de la matière dans ledit sang complet ou des moyens (40, 42; 46; 50, 52, 56; 38, 54) pour enlever de la matière dudit sang complet au travers desdites couches de membrane (12, 74; 14, 72),

—des moyens d'étanchéité associés à chacune desdites première (16, 78) et seconde couches d'espacement (18, 44, 49, 51, 76) pour empêcher du sang complet d'être mélangé à de la matière introduite dans ledit sang complet sans faire passer d'abord ladite matière au travers d'une couche de membrane (72, 74) ou bien pour empêcher du sang complet d'être mélangé à du sang duquel une fraction de sang a été enlevée, caractérisé en ce que:

—chaque canal (32, 82) de ladite pluralité de canaux (32, 82) ménagés à l'intérieur de ladite première couche d'espacement (16, 78) a une hauteur comprise entre 0,02 et 0,1 mm et s'étend dans toute l'épaisseur de ladite première couche d'espacement (16, 78), et en ce que lesdites couches de membrane (12, 74; 14, 72) sont liées à la première (16, 78) et à la seconde (18, 44, 49, 51, 76) couche d'espacement sur toutes leurs surfaces correspondantes.

2. L'appareil selon la revendication 1, comprenant un moyen (38) pour collecter du plasma et un moyen (36) pour collecter du sang appauvri en plasma provenant desdites unités à membranes (10) et un moyen (34) pour introduire du sang complet dans lesdites unités à membranes (10).

3. L'appareil selon la revendication 1, comprenant un moyen (75) pour introduire un gaz contenant de l'oxygène libre dans des canaux (79) positionnés à l'intérieur de ladite seconde couche d'espacement (76) et s'étendant dans toute l'épaisseur de ladite seconde couche d'espacement, un moyen (71) pour introduire du sang complet dans les canaux (82) de ladite première couche d'espacement (78), un moyen (81) pour enlever du sang oxygéné desdites unités à membranes (70) et un moyen (77) pour évacuer du gaz appauvri en oxygène desdites unités à membrane (70).

4. L'appareil selon les revendications 1 et 2, pour séparer du sang complet en une fraction de plasma et une fraction de sang appauvri en plasma et enrichi, dans lequel:

—ladite seconde couche d'espacement (18, 44, 49, 51) comprend des moyens (40, 42; 46; 50, 52; 56) reliés à une sortie de plasma (38, 54) et adaptés pour collecter du plasma à partir dudit sang complet,

—les moyens d'étanchéité associés à chacune desdites première (16) et seconde (18) couches d'espacement empêchent du sang complet ou du sang appauvri en plasma de passer par ladite sortie de plasma (38, 54),

—chacun desdits canaux (32) ménagés dans ladite première couche d'espacement (16) a en outre une longueur comprise entre 1 et 10 cm, a cumulativement une largeur comprise entre environ 20 et 100 cm, et a individuellement une largeur comprise entre environ 0,05 et 0,5 cm, et

—lesdits moyens (40, 42; 46; 50, 52) de ladite seconde couche d'espacement (18, 44, 49) adaptés pour collecter du plasma à partir dudit sang complet s'étendent également dans toute l'épaisseur de ladite seconde couche d'espacement (18, 44, 49).

5. L'appareil selon la revendication 4, dans lequel les canaux (32) ménagés dans ladite première couche d'espacement (16) ont chacun une hauteur comprise entre environ 0,06 et 0,09 mm.

6. L'appareil selon la revendication 4, dans lequel les canaux (32) ménagés dans ladite première couche d'espacement (16) ont chacun une longueur comprise entre environ 4 et 6 cm.

7. L'appareil selon la revendication 4, dans lequel les canaux (32) ménagés dans ladite première couche d'espacement (16) ont une largeur cumulative comprise entre environ 50 et 70 cm.

8. L'appareil selon la revendication 4, dans lequel ladite seconde couche d'espacement (18) comprend une pluralité de canaux parallèles (46) qui sont chacun reliés directement à une sortie de plasma.

9. L'appareil selon la revendication 4, dans lequel la pluralité de canaux (48, 50) prévus dans ladite seconde couche d'espacement (18) sont reliés à un passage (42, 52) s'étendant perpendiculairement auxdits canaux (40, 50) et ledit passage (42, 52) est relié à ladite sortie de plasma (38, 54).

10. Procédé de séparation de sang complet en une fraction de plasma et une fraction de sang appauvri en plasma et enrichi, le procédé étant destiné à des applications non-thérapeutiques et ne faisant pas intervenir de diagnostic et servant à récupérer le plasma, ledit procédé consistant à:

—introduire du sang complet dans des premiers canaux (32) ménagés à l'intérieur d'une première couche d'espacement (16) d'une unité à membranes (10),

—ladite unité à membranes (10) se composant d'une première couche de membrane (12), d'une seconde couche de membrane (14), ladite première couche d'espacement (16) étant disposée entre une première surface de la première couche de membrane (12) et une première surface de ladite seconde couche de membrane (14), et d'une seconde couche d'espacement (18, 44, 49) positionnée sur une seconde surface de ladite seconde couche de membrane (14),

—enlever du sang traité desdits premiers canaux (32),

—effectuer un transfert de plasma à partir dudit sang complet, au travers desdites couches de membrane (12, 14) jusque dans des seconds canaux (40, 42, 46, 50, 52) de ladite couche d'espacement (18, 44, 49),

—enlever du plasma desdits seconds canaux (40, 42, 46, 50, 52) par l'intermédiaire d'une sortie (38) reliée auxdits seconds canaux, et

—pourvoir de moyens d'étanchéité chacune desdites première (16) et seconde (18, 44, 49) couches d'espacement pour empêcher du sang complet d'être admis avec du sang duquel la fraction de plasma a été enlevée, caractérisé en ce que:

—les canaux (32, 40, 42, 46, 50, 52) ménagés dans lesdites première et seconde couches d'espacement s'étendent dans toute l'épaisseur desdites première et seconde couches d'espacement (16, 18, 44, 49),

—la hauteur des canaux (32) ménagés dans ladite première couche d'espacement (16) étant comprise entre 0,02 et 0,1 mm, et

—lesdites première et seconde couches de membrane (12, 14) sont liées à la première (16) et à la seconde (18, 44, 49) couche d'espacement sur toutes leurs surfaces correspondantes.

11. Le procédé de la revendication 10, dans lequel les canaux (32) ménagés dans ladite première couche d'espacement (16) ont une longueur comprise entre environ 1 et 10 cm, une largeur cumulative comprise entre environ 20 et 100 cm et une largeur individuelle comprise entre environ 0,05 et 0,5 cm.

Fig. 1

Fig. 2

Fig. 3

Fig. 4

Fig. 5

*Fig. 6*

Fig. 7

Fig. 8

5

Fig. 9

Fig. 10

Fig. 11

*Fig. 12*

0 081 101